(19) Europäisches Patentamt / European Patent Office / Office européen des brevets

(11) **EP 4 379 888 A1**

(12) **EUROPEAN PATENT APPLICATION**
published in accordance with Art. 153(4) EPC

(43) Date of publication:
**05.06.2024 Bulletin 2024/23**

(21) Application number: **22849102.3**

(22) Date of filing: **27.06.2022**

(51) International Patent Classification (IPC):
*H01M 10/0567* (2010.01)   *H01M 4/36* (2006.01)
*H01M 4/38* (2006.01)   *H01M 4/48* (2010.01)
*H01M 4/58* (2010.01)   *H01M 10/052* (2010.01)

(52) Cooperative Patent Classification (CPC):
**H01M 4/36; H01M 4/38; H01M 4/48; H01M 4/58;**
**H01M 10/052; H01M 10/0567;** Y02E 60/10

(86) International application number:
**PCT/JP2022/025454**

(87) International publication number:
**WO 2023/008030 (02.02.2023 Gazette 2023/05)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **28.07.2021 JP 2021123363**
**04.04.2022 JP 2022062673**

(71) Applicant: SHIN-ETSU CHEMICAL CO., LTD.
**Tokyo 1000005 (JP)**

(72) Inventors:
• **AOKI, Shotaro**
**Joetsu-shi, Niigata 942-8601 (JP)**

• **KIYOMORI, Ayumu**
**Joetsu-shi, Niigata 942-8601 (JP)**
• **HIROSE, Takakazu**
**Annaka-shi, Gunma 379-0125 (JP)**
• **OSAWA, Yusuke**
**Annaka-shi, Gunma 379-0125 (JP)**
• **KANESATO, Shuhei**
**Tokyo 100-0005 (JP)**

(74) Representative: **Sonnenhauser, Thomas Martin**
**Wuesthoff & Wuesthoff**
**Patentanwälte und Rechtsanwalt PartG mbB**
**Schweigerstraße 2**
**81541 München (DE)**

(54) **NON-AQUEOUS ELECTROLYTE SOLUTION AND NON-AQUEOUS ELECTROLYTE SECONDARY BATTERY PROVIDED WITH SAME**

(57)   The present invention is a non-aqueous electrolyte liquid including: a non-aqueous solvent; an electrolyte salt dissolved in the non-aqueous solvent; and a silane compound represented by the following general formula (1),

$$Si(R^1)_l(R^2)_m(R^3)_n(R^4)_{4-l-m-n} \quad (1)$$

wherein $R^1$ represents an alkenyl group having 2 to 20 carbon atoms, $R^2$ represents a substituted or unsubstituted arylethynyl group having 8 to 20 carbon atoms, $R^3$ represents an alkyl group having 1 to 20 carbon atoms, $R^4$ represents an alkynyl group having 2 to 20 carbon atoms, "l" and "m" each independently represent an integer of 1 to 3, "n" represents an integer of 0 to 2, and "l", "m", and "n" represent integers satisfying $2 \leq l+m+n \leq 4$. This can provide: a non-aqueous electrolyte liquid that can achieve improved battery cycle characteristics; and a non-aqueous electrolyte secondary battery containing this non-aqueous electrolyte liquid.

EP 4 379 888 A1

[Fig. 1]

**Description**

TECHNICAL FIELD

The present invention relates to a non-aqueous electrolyte liquid and a non-aqueous electrolyte secondary battery containing the same.

BACKGROUND ART

Small-sized electronic devices represented by mobile terminals have been widespread in recent years, and further miniaturizing, lightweight property, and longer lifetime are strongly demanded. For such market demands, in particular, development of small-sized and lightweight secondary batteries that can yield a high energy density is in progress. It is investigated that this secondary battery is applied for not only the small-sized electronic devices but also large-sized electronic devices represented by automobiles and for power storage systems represented by houses.

Among these, a lithium-ion secondary battery has been promising because the lithium-ion secondary battery has a small size, easily has an increased capacity, and can yield a higher energy density than a lead battery and a nickel-cadmium battery.

The above lithium-ion secondary battery has a positive electrode, a negative electrode, a separator, and an electrolyte liquid, and the negative electrode contains a negative electrode active material, which is involved with charge-discharge reactions.

For this negative electrode active material, a carbon-based active material is widely used, and meanwhile, the recent market demands have required further increase in a battery capacity. For increasing the battery capacity, use of silicon as a material for the negative electrode active material is investigated. This is because a theoretical capacity of silicon (4199 mAh/g) is ten times or more higher than a theoretical capacity of graphite (372 mAh/g), and thereby remarkable increase in the battery capacity is expected. Development of the silicon material as the material for the negative electrode active material is investigated on not only a silicon single substance but also compounds, etc. represented by an alloy and an oxide. A form of the negative electrode active material is investigated from a coating type, which is standard in the carbon-based active material, to an integrated type in which the active material is directly deposited on a current collector.

However, use of silicon as a main raw material of the negative electrode active material causes the negative electrode active material to expand and contract during charge and discharge, easily leading to cracking mainly near a surface layer of the negative electrode active material. In addition, an ionic substance is generated inside the negative electrode active material, which causes the negative electrode active material to be a fragile substance. Cracking of the surface layer of the negative electrode active material consequently generates a new surface to increase a reaction area of the negative electrode active material. In this time, a decomposition reaction of the electrolyte liquid occurs on the new surface, and a coating being a decomposed product of the electrolyte liquid is formed on the new surface to consume the electrolyte liquid. Therefore, cycle characteristics are likely to be deteriorated.

There have been various investigations so far on the negative electrode material for the lithium-ion secondary battery with the silicon-based material as a main material and electrode constitution in order to improve battery initial efficiency and the cycle characteristics.

Specifically, silicon and amorphous silicon dioxide are simultaneously deposited by using a gas phase method for a purpose of obtaining good cycle characteristics and high safety (see Patent Document 1, for example). To obtain a high battery capacity and safety, a carbon material (electron conductive material) is provided on surface layers of silicon oxide particles (see Patent Document 2, for example). To improve the cycle characteristics and to obtain high input-output characteristics, an active material containing silicon and oxygen is produced, and an active material layer having a higher oxygen proportion near a current collector is formed (see Patent Document 3, for example). To improve the cycle characteristics, a negative electrode is formed so that a silicon active material contains oxygen, an average oxygen content is 40 at% or less, and an oxygen content becomes large near a current collector (see Patent Document 4, for example).

As an electrolyte liquid additive to inhibit decomposition reactions of the electrolyte liquid accompanied with charge and discharge of the silicon active material, use of fluoroethylene carbonate (FEC) is reported (see Patent Document 5, for example). Since the fluorine-based electrolyte liquid forms a stable solid electrolyte interphase (SEI) film on a silicon surface, such an electrolyte liquid can inhibit deterioration of the silicon material.

CITATION LIST

PATENT LITERATURE

Patent Document 1: JP 2001-185127 A
Patent Document 2: JP 2002-042806 A
Patent Document 3: JP 2006-164954 A
Patent Document 4: JP 2006-114454 A
Patent Document 5: JP 2006-134719 A

SUMMARY OF INVENTION

TECHNICAL PROBLEM

As noted above, the small-sized electronic devices represented by mobile terminals have had higher performance and more functions in recent years, and the lithium-ion secondary battery, which is a main power source therefor, has required to increase the battery capacity. As one solution for this problem, there has been a demand for development of a lithium-ion secondary battery composed of a negative electrode using a silicon material as a main material. The lithium-ion secondary battery using the silicon material is desired to have cycle characteristics comparable to those of a lithium-ion secondary battery using a carbon-based active material. Accordingly, a fluorine-based additive has been developed, and the battery characteristics has tended to be improved. However, repeated charge and discharge consume the fluorine-based solvent to increase a decomposed product of the electrolyte liquid deposited on a surface of the silicon material, and lithium moving reversibly is deactivated with incorporation into the decomposed product to deteriorate the battery cycle characteristics. In addition, a battery cell inflates due to a swelling phenomenon. Thus, the battery characteristics are insufficient compared with characteristics of a battery using the carbon-based active material.

The present invention been made in view of the above problems. An object of the present invention is to provide a non-aqueous electrolyte liquid that can achieve improved battery cycle characteristics, and a non-aqueous electrolyte secondary battery containing this non-aqueous electrolyte liquid.

SOLUTION TO PROBLEM

To solve the above problem, the present invention provides a non-aqueous electrolyte liquid comprising:

a non-aqueous solvent;
an electrolyte salt dissolved in the non-aqueous solvent; and
a silane compound represented by the following general formula (1),

$$\text{Si}(R^1)_l(R^2)_m(R^3)_n(R^4)_{4-l-m-n} \qquad (1)$$

wherein $R^1$ represents an alkenyl group having 2 to 20 carbon atoms, $R^2$ represents a substituted or unsubstituted arylethynyl group having 8 to 20 carbon atoms, $R^3$ represents an alkyl group having 1 to 20 carbon atoms, $R^4$ represents an alkynyl group having 2 to 20 carbon atoms, "l" and "m" each independently represent an integer of 1 to 3, "n" represents an integer of 0 to 2, and "l", "m", and "n" represent integers satisfying $2 \le l+m+n \le 4$.

The silane compound having both of at least one or more alkenyl groups and at least one or more arylethynyl groups as above can be decomposed on the negative electrode surface during charge to form a good coating. Particularly, such a silane compound can stabilize a reaction of a Li silicate portion constituting the silicon-based negative electrode active material to form the good coating. Furthermore, the reaction with $Li_2SiO_3$ constituting the silicon-based negative electrode material is inhibited, and a stable coating can be formed with $Li_4SiO_4$, which is formed by conversion of $Li_2SiO_3$, by repeated charge and discharge. As a result, the cycle characteristics of the battery are improved, and the battery inflation is inhibited.

In the silane compound represented by the general formula (1), $R^2$ in the general formula (1) is preferably the unsubstituted arylethynyl group or an arylethynyl group having 8 to 20 carbon atoms in which a part or all of hydrogen atoms in an aryl group are substituted with a hydrocarbon group having 1 to 6 carbon atoms, an alkoxy group having 1 to 6 carbon atoms, or a halogen atom.

The electrolyte liquid containing such a silane compound can improve the cycle characteristics of the battery and can inhibit the battery inflation.

In the silane compound represented by the general formula (1), "l" and "m" in the general formula (1) preferably each independently represent an integer of 1 to 3, "n" represents an integer of 0 to 1, and "l", "m", and "n" preferably represent integers satisfying 1+m+n = 4.

The electrolyte liquid containing such a silane compound can more sufficiently improve the battery characteristics.

A content of the silane compound in the non-aqueous electrolyte liquid is preferably 0.1 mass% to 5.0 mass%.

The electrolyte liquid containing the silane compound at such a concentration can more sufficiently improve the battery characteristics.

The present invention also provides a non-aqueous electrolyte secondary battery comprising:

a positive electrode;
a negative electrode; and
a non-aqueous electrolyte liquid,
wherein the non-aqueous electrolyte liquid is the inventive non-aqueous electrolyte liquid.

Such a non-aqueous electrolyte secondary battery contains the inventive non-aqueous electrolyte liquid, and thereby the improved cycle characteristics can be exhibited, and the battery expansion can be inhibited.

The negative electrode preferably contains negative electrode active material particles, the negative electrode active material particles preferably contain $Li_2SiO_3$ and contain silicon oxide particles coated with a carbon layer, and the $Li_2SiO_3$ preferably contains a crystalline portion.

Such a non-aqueous electrolyte secondary battery can exhibit a higher capacity and more improved cycle characteristics, and can sufficiently inhibit the battery expansion.

In this case, before the negative electrode active material particles are charged and discharged, the negative electrode active material particles preferably have a peak derived from a Si (111) crystal plane obtained by X-ray diffraction using Cu-K$\alpha$ ray, a crystallite size corresponding to the crystal plane is preferably 5.0 nm or less, and a ratio A/B of an intensity A of the peak derived from the Si (111) crystal plane relative to an intensity B of a peak derived from a $Li_2SiO_3$ (111) crystal plane preferably satisfies the following formula (2),

$$0.4 \leq A/B \leq 1.0 \quad ...(2).$$

Such negative electrode active material particles can exhibit high slurry stability without impairing easiness of conversion from $Li_2SiO_3$ into $Li_4SiO_4$. Thus, the non-aqueous electrolyte secondary battery containing such negative electrode active material particles can exhibit more excellent battery characteristics.

ADVANTAGEOUS EFFECTS OF INVENTION

As above, the inventive non-aqueous electrolyte liquid can achieve the improved battery cycle characteristics and can inhibit the battery inflation.

Particularly, the inventive non-aqueous electrolyte liquid can achieve the sufficient battery cycle characteristics even with the non-aqueous electrolyte secondary battery using the silicon-based negative electrode material.

The inventive non-aqueous electrolyte secondary battery can achieve the improved battery cycle characteristics and can inhibit the battery inflation.

BRIEF DESCRIPTION OF DRAWINGS

FIG. 1 is an schematic exploded view illustrating an example of the inventive non-aqueous electrolyte secondary battery.

FIG. 2 is a schematic cross-sectional view of an example of a negative electrode that can be contained in the inventive non-aqueous electrolyte secondary battery.

DESCRIPTION OF EMBODIMENTS

As noted above, there has been demand for development of the non-aqueous electrolyte liquid that can achieve improved battery cycle characteristics and the non-aqueous electrolyte secondary battery containing this non-aqueous electrolyte liquid.

The present inventors have made earnest study to achieve the above object, and consequently found that the above object can be achieved by using a non-aqueous electrolyte liquid containing a silane compound having at least one or more alkenyl groups and at least one or more arylethynyl groups. This finding has led to completion of the present invention.

Specifically, the present invention is a non-aqueous electrolyte liquid comprising:

a non-aqueous solvent;
an electrolyte salt dissolved in the non-aqueous solvent; and
a silane compound represented by the following general formula (1),

$$Si(R^1)_l(R^2)_m(R^3)_n(R^4)_{4-l-m-n} \qquad (1)$$

wherein $R^1$ represents an alkenyl group having 2 to 20 carbon atoms, $R^2$ represents a substituted or unsubstituted arylethynyl group having 8 to 20 carbon atoms, $R^3$ represents an alkyl group having 1 to 20 carbon atoms, $R^4$ represents an alkynyl group having 2 to 20 carbon atoms, "l" and "m" each independently represent an integer of 1 to 3, "n" represents an integer of 0 to 2, and "l", "m", and "n" represent integers satisfying $2 \leq l+m+n \leq 4$.

In addition, the present invention is a non-aqueous electrolyte secondary battery comprising:

a positive electrode;
a negative electrode; and
a non-aqueous electrolyte liquid,
wherein the non-aqueous electrolyte liquid is the inventive non-aqueous electrolyte liquid.

Hereinafter, the present invention will be described in detail, but the present invention is not limited thereto.

[Non-Aqueous Electrolyte Liquid]

The inventive non-aqueous electrolyte liquid contains a silane compound (hereinafter, referred to as "compound (1)") represented by the following general formula (1) and having at least one or more alkenyl groups and at least one or more arylethynyl groups.

$$Si(R^1)_l(R^2)_m(R^3)_n(R^4)_{4-l-m-n} \qquad (1)$$

Hereinafter, the compound (1) will be described in more detail.

In the general formula (1), $R^1$ represents an alkenyl group having 2 to 20, preferably 2 to 10, and more preferably 2 to 5, carbon atoms.

Specific examples of the alkenyl group of $R^1$ include: linear alkenyl groups, such as a vinyl group, an n-propenyl group, an n-butenyl group, an n-pentenyl group, an n-hexenyl group, an n-heptenyl group, an n-octenyl group, an n-nonenyl group, an n-decenyl group, an n-undecenyl group, and an n-dodecenyl group; and branched alkenyl groups, such as an isopropenyl group, an isobutenyl group, an isopentenyl group, an isohexenyl group, an isoheptenyl group, an isooctenyl group, an isononyl group, an isodecenyl group, and an isoundecyl group.

Among these, a vinyl group and an n-propenyl group are preferable from the viewpoint of sufficient improvement of the battery characteristics.

The alkenyl group is decomposed on the negative electrode surface during charge to form a good coating. This coating inhibits direct contacting between the non-aqueous electrolyte liquid and the electrode active material to prevent decomposition of the non-aqueous solvent and the solute, and to inhibit deterioration of battery performance.

In the general formula (1), $R^2$ represents a substituted or unsubstituted arylethynyl group having 8 to 20, preferably 8 to 16, more preferably 8 to 12, carbon atoms.

Specific examples of the unsubstituted arylethynyl group of $R^2$ include unsubstituted arylethynyl groups such as a phenylethynyl group, a 1-naphthylethynyl group, a 2-naphthylethynyl group, a 1-anthracenylethynyl group, a 2-anthracenylethynyl group, and a 9-anthracenylethynyl group.

A part or all of hydrogen atoms in an aryl group in the arylethynyl group of $R^2$ may be substituted with a hydrocarbon group having 1 to 6, preferably 1 to 3, carbon atoms, an alkoxy group having 1 to 6 carbon atoms, or a halogen atom. Specific examples of the hydrocarbon group include: alkyl groups having 1 to 6, preferably 1 to 3, carbon atoms, such as a methyl group and an ethyl group; alkenyl groups having 2 to 6, preferably 2 to 4, carbon atoms, such as a vinyl group and an n-propenyl group; and alkynyl groups having 2 to 6, preferably 2 to 4, carbon atoms, such as an ethynyl group and a 1-propynyl group. Specific examples of the alkoxy group include alkoxy group having 1 to 6, preferably 1 to 3, carbon atoms, such as a methoxy group, an ethoxy group, an n-propyoxy group, and an isopropoxy group, and a methoxy group or an ethoxy group is preferable. Specific examples of the halogen atom include a fluorine atom, a chlorine atom, a bromine atom, and an iodine atom, and a fluorine atom is preferable.

Specific examples of the arylethynyl group of $R^2$ substituted with the hydrocarbon group include: arylethynyl groups in which a hydrogen atom in the aryl group is substituted with an alkyl group, such as a 2-methylphenylethynyl group, a 3-methylphenylethynyl group, a 4-methylphenylethynyl group, a 2-ethylphenylethynyl group, a 3-ethylphenylethynyl group, a 4-ethylphenylethynyl group, a 3-acenaphthenylethynyl group, a 4-acenaphthenylethynyl group, and a 5-acenaphthenylethynyl group; arylethynyl groups in which a hydrogen atom in the aryl group is substituted with an alkenyl group, such as a 2-vinylphenylethynyl group, a 3-vinylphenylethynyl group, and a 4-vinylphenylethynyl group; and arylethynyl groups in which a hydrogen atom in the aryl group is substituted with an alkynyl group, such as a 2-ethynylphenylethynyl group, a 3-ethynylphenylethynyl group, and a 4-ethynylphenylethynyl group.

Specific examples of the arylethynyl group of $R^2$ substituted with the alkoxy group include a 2-methoxyphenylethynyl group, a 3-methoxyphenylethynyl group, a 4-methoxyphenylethynyl group, a 2-ethoxyphenylethynyl group, a 3-ethoxyphenylethynyl group, a 4-ethoxyphenylethynyl group, a 2,3-dimethoxyphenylethynyl group, a 2,4-dimethoxyphenylethynyl group, a 2,5-dimethoxyphenylethynyl group, a 2,6-dimethoxyphenylethynyl group, a 3,4-dimethoxyphenylethynyl group, and a 3,5-dimethoxyphenylethynyl group.

Specific examples of the arylethynyl group of $R^2$ substituted with the halogen atom include a 2-fluorophenylethynyl group, a 3-fluorophenylethynyl group, a 4-fluorophenylethynyl group, a 2-chlorophenylethynyl group, a 3-chlorophenylethynyl group, a 4-chlorophenylethynyl group, a 2-bromophenylethynyl group, a 3-bromophenylethynyl group, a 4-bromophenylethynyl group, a 2-iodophenylethynyl group, a 3-iodophenylethynyl group, a 4-iodophenylethynyl group, a 2,3-difluorophenylethynyl group, a 2,4-difluorophenylethynyl group, a 2,5-difluorophenylethynyl group, a 2,6-difluorophenylethynyl group, a 3,4-difluorophenylethynyl group, and a 3,5-difluorophenylethynyl group.

Among these, preferable from the viewpoint of sufficient improvement of the battery characteristics are: the unsubstituted arylethynyl groups such as a phenylethynyl group; the arylethynyl groups substituted with the alkyl group such as a 4-methylphenylethynyl group and a 4-ethylphenylethynyl group; the arylethynyl groups substituted with the alkoxy group such as a 4-methoxyphenylethynyl group and a 4-ethoxyphenylethynyl group; and the arylethynyl groups substituted with the halogen atom such as a 4-fluorophenylethynyl group, a 4-bromophenylethynyl group, 4-chlorophenylethynyl group, and a 4-iodophenylethynyl group.

The arylethynyl group is decomposed on the negative electrode surface during charge to form a good coating. This coating inhibits direct contacting between the non-aqueous electrolyte liquid and the electrode active material to prevent decomposition of the non-aqueous solvent and the solute, and to inhibit deterioration of battery performance. In addition, the aryl group in the arylethynyl group has a large effect of decreasing a lowest unoccupied molecular orbital (LUMO) level of the compound. Thus, the compound having the arylethynyl group is relatively easily decomposed on the negative electrode surface during charge to easily form the good coating.

In the general formula (1), $R^3$ represents an alkyl group having 1 to 20, preferably 1 to 10, and more preferably 1 to 4, carbon atoms.

Specific examples of the alkyl group of $R^3$ include: linear alkyl groups, such as a methyl group, an ethyl group, an n-propyl group, an n-butyl group, an n-pentyl group, an n-hexyl group, an n-heptyl group, an n-octyl group, an n-nonyl group, an n-decyl group, an n-undecyl group, and an n-dodecyl group; and branched alkyl groups, such as an isopropyl group, an isobutyl group, a sec-butyl group, a tert-butyl group, an isopentyl group, a neopentyl group, an isohexyl group, an isoheptyl group, an isooctyl group, a tert-octyl group, an isononyl group, an isodecyl group, and an isoundecyl group.

Among these, a methyl group, an ethyl group, and an n-propyl group are preferable from the viewpoint of sufficient improvement of the battery characteristics.

In the general formula (1), $R^4$ represents an alkynyl group having 2 to 20, preferably 2 to 10, and more preferably 2 to 5, carbon atoms.

Specific examples of the alkynyl group of $R^4$ include: linear alkynyl groups, such as an ethynyl group, a 1-propynyl group, a 1-butynyl group, a 1-pentynyl group, a 1-hexynyl group, a 1-heptynyl group, a 1-octynyl group, a 1-nonynyl group, a 1-decynyl group, a 1-undecynyl group, and a 1-dodecynyl group; and branched alkynyl groups, such as a 3-methyl-1-butynyl group, a 3,3-dimethyl-1-butynyl group, a 3-methyl-1-pentynyl group, a 4-methyl-1-pentynyl group, a 3,3-dimethyl-1-pentynyl group, a 3,4-dimethyl-1-pentynyl group, and a 4,4-dimethyl-1-pentynyl group.

Among these, an ethynyl group, a 1-propynyl group, and a 1-butynyl group are preferable from the viewpoint of sufficient improvement of the battery characteristics.

In the general formula (1), "l" and "m" each independently represent an integer of 1 to 3, "n" represents an integer of 0 to 2, and "l", "m", and "n" represent integers satisfying $2 \leq l+m+n \leq 4$. From the viewpoint of sufficient improvement of the battery characteristics, "l" and "m" preferably each independently represent an integer of 1 to 3, "n" preferably represent 0 to 1, and "l", "m", and "n" preferably represent integers satisfying l+m+n = 4 in the general formula (1).

The compound (1) having both of the at least one or more alkenyl groups and the at least one or more arylethynyl groups as above is decomposed on the negative electrode surface during charge to form the good coating. Particularly, the compound (1) can stabilize a reaction of a Li silicate portion constituting the silicon-based negative electrode active material to form the good coating. In addition to the inhibition of the reaction with $Li_2SiO_3$ constituting the silicon-based negative electrode material, repeated charge and discharge can form a stable coating also with $Li_4SiO_4$, which is formed by conversion of $Li_2SiO_3$. As a result, the battery cycle characteristics are improved, and the battery inflation is inhibited.

Specific examples of the compound (1) include phenylethynyltrivinylsilane, bis(phenylethynyl)divinylsilane, tris(phenylethynyl)vinylsilane, 4-methylphenylethynyltrivinylsilane, bis(4-methylphenylethynyl)divinylsilane, tris(4-methylphenylethynyl)vinylsilane, 4-methoxyphenylethynyltrivinylsilane, bis(4-methoxyphenylethynyl)divinylsilane, tris(4-methoxyphenylethynyl)vinylsilane, 4-fluorophenylethynyltrivinylsilane, bis(4-fluorophenylethynyl)divinylsilane, tris(4-fluorophenylethynyl)vinylsilane, phenylethynylmethyldivinylsilane, bis(phenylethynyl)methylvinylsilane, 4-methylphenylethynylmethyldivinylsilane, bis(4-methylphenylethynyl)methylvinylsilane, 4-methoxylphenylethynylmethyldivinylsilane, bis(4-methoxylphenylethynyl)methylvinylsilane, 4-fluorophenylethynylmethyldivinylsilane, bis(4-fluorophenylethynyl)methylvinylsilane, phenylethynyldimethylvinylsilane, 4-methylphenylethynyldimethylvinylsilane, 4-methoxylphenylethynyldimethylvinylsilane, 4-fluorophenylethynyldimethylvinylsilane, ethynylphenylethynylmethylvinylsilane, ethynyl-4-methylphenylethynylmethylvinylsilane, ethynyl-4-methoxyphenylethynylmethylvinylsilane, and ethynyl-4-fluorophenylethynylmethylvinylsilane.

The silane compound represented by the general formula (1) is obtained by, for example, a reaction between: a vinylhalosilane; and an arylethynylmagnesium halide or an arylethynyllithium.

A content of the compound (1) in the non-aqueous electrolyte liquid is preferably 0.1 mass% to 5.0 mass%, more preferably 0.1 mass% to 4.0 mass%, and further preferably 0.1 mass% to 2.0 mass% from the viewpoint of sufficient improvement of the battery performance.

In addition to the compound (1), the inventive non-aqueous electrolyte liquid further contains a non-aqueous solvent and an electrolyte salt dissolved in the non-aqueous solvent. The inventive non-aqueous electrolyte liquid may further contain another material as an additive.

Examples of the non-aqueous solvent include ethylene carbonate, propylene carbonate, butylene carbonate, dimethyl carbonate, diethyl carbonate, ethyl methyl carbonate, methyl propyl carbonate, 1,2-dimethoxyethane, or tetrahydrofuran. Among these, at least one or more of ethylene carbonate, propylene carbonate, dimethyl carbonate, diethyl carbonate, and ethyl methyl carbonate are desirably used from the viewpoint of obtaining better characteristics. In this case, combination of: a high-viscosity solvent such as ethylene carbonate and propylene carbonate; and a low-viscosity solvent such as dimethyl carbonate, ethyl methyl carbonate, and diethyl carbonate can increase dissociation of the electrolyte salt and ion mobility to obtain more advantageous characteristics.

When an alloy-type negative electrode containing the silicon-based negative electrode material is used, the non-aqueous solvent desirably contains at least one of a halogenated chain carbonate ester or a halogenated cyclic carbonate ester. This forms a stable coating on the surface of the negative electrode active material during charge and discharge, particularly during charge. Here, the halogenated chain carbonate ester refers to a chain carbonate ester having a halogen as a constituent element (at least one hydrogen is substituted with a halogen atom). The halogenated cyclic carbonate ester refers to a cyclic carbonate ester having a halogen as a constituent element (that is, at least one hydrogen is substituted with a halogen atom).

A type of the halogen atom is not particularly limited, but preferably a fluorine from the viewpoint of forming a better coating compared with other halogen atoms. A larger number of the halogen atoms is desirable in terms of obtaining a more stable coating and inhibiting a decomposition reaction of the electrolyte liquid.

Examples of the halogenated chain carbonate ester include fluoromethyl methyl carbonate and difluoromethyl methyl carbonate. Examples of the halogenated cyclic carbonate ester include 4-fluoro-1,3-dioxolan-2-one and 4,5-difluoro-1,3-dioxolan-2-one.

The electrolyte salt may contain any one or more of a light metal salt such as a lithium salt, for example. Examples of the lithium salt include lithium hexafluorophosphate ($LiPF_6$) and lithium tetrafluoroborate ($LiBF_4$).

A content of the electrolyte salt is preferably 0.5 mol/kg or more and 2.5 mol/kg or less, more preferably 0.8 mol/kg or more and 2.0 mol/kg or less, and further preferably 0.8 mol/kg or more and 1.5 mol/kg or less relative to the non-aqueous solvent from the viewpoint of obtaining high ion conductivity.

The inventive non-aqueous electrolyte liquid may contain, as an additive other than the compound (1), an unsaturated carbon bond cyclic carbonate ester, a sultone (cyclic sulfonate ester), and an acid anhydride, for example.

The unsaturated carbon bond cyclic carbonate ester may be contained from the viewpoint of formation of the stable coating on the negative electrode surface during charge and discharge and the viewpoint of inhibition of the decomposition reaction of the non-aqueous electrolyte liquid. Examples of thereof include vinylene carbonate or vinylethylene carbonate.

The sultone may be contained from the viewpoint of improvement of chemical stability of the battery, and examples thereof include propane sultone and propene sultone.

The acid anhydride may be contained from the viewpoint of improvement of the chemical stability of the electrolyte liquid, and examples thereof include propanedisulfonic anhydride.

Qualitative and quantitative analysis of the compound (1) in the non-aqueous electrolyte liquid can be performed by, for example, gas chromatography mass spectrometry (GC/MS), etc.

[Non-Aqueous Electrolyte Secondary Battery]

The inventive non-aqueous electrolyte secondary battery comprises a positive electrode and a negative electrode in addition to the above non-aqueous electrolyte liquid. That is, the inventive non-aqueous electrolyte liquid described above can be used as a non-aqueous electrolyte liquid for a non-aqueous electrolyte secondary battery.

Hereinafter, the positive electrode and the negative electrode that may be contained in the inventive non-aqueous electrolyte secondary battery will be described.

[Positive Electrode]

The positive electrode has constitution having a positive electrode active material layer on both surfaces or one surface of a positive electrode current collector, for example.

Here, the positive electrode current collector is formed with a conductive material such as aluminum, for example.

Meanwhile, the positive electrode active material layer contains any one or two or more of positive electrode materials that can occlude and release lithium ions, and may contain other materials such as a binder, a conductive auxiliary, and a dispersant, according to design. In this case, the binder and the conductive auxiliary to be used may be same as, for example, a negative electrode binding agent and a negative electrode conductive auxiliary, described later.

Examples of the positive electrode material include lithium-containing compounds such as: a composite oxide containing lithium and a transition metal element; or a phosphate compound containing lithium and a transition metal element from the viewpoints of obtaining a high battery capacity and obtaining excellent cycle characteristics.

The transition metal element is preferably nickel, iron, manganese, or cobalt, and the lithium-containing compound is a compound containing at least one or more of these transition metal elements.

The chemical formula of the lithium-containing compound is represented as $Li_aM1O_2$ or $Li_bM2PO_4$, for example. In the formulae, M1 and M2 represent at least one or more of the transition metal elements. The values "a" and "b" exhibit different values depending on a charge-discharge state of the battery, and are typically numbers satisfying $0.05 \leq a \leq 1.10$ and $0.05 \leq b \leq 1.10$.

Specific examples of the composite oxide containing lithium and the transition metal element include lithium-cobalt composite oxide ($Li_xCoO_2$), lithium-nickel composite oxide ($Li_xNiO_2$), lithium-nickel-cobalt composite oxide, and lithium-nickel-cobalt composite oxide (lithium-nickel-cobalt-aluminum composite oxide; NCA and lithium-nickel-cobalt-manganese composite oxide + NCM).

Specific examples of the phosphate compound having lithium and the transition metal element include lithium iron phosphate compound ($LiFePO_4$) and lithium iron manganese phosphate compound ($LiFe_{1-u}Mn_uPO_4$, wherein $0<u<1$). Use of these positive electrode materials can yield a high battery capacity and excellent cycle characteristics.

[Negative Electrode]

The negative electrode has constitution having a negative electrode active material layer on a negative electrode current collector, for example. This negative electrode active material layer may be provided on both surfaces or only one surface of the negative electrode current collector.

[Negative Electrode Current Collector]

The negative electrode current collector is composed of a material having excellent conductivity and being superior in mechanical strength. Examples of the conductive material usable for the negative electrode current collector include copper (Cu) and nickel (Ni). This conductive material is preferably a material that does not form an intermetallic compound with lithium (Li) .

The negative electrode current collector preferably contains carbon (C) or sulfur (S) in addition to the copper (Cu) or the nickel (Ni) from the viewpoint of increase in physical strength of the negative electrode current collector. Particularly, when the negative electrode has an active material layer that expands during charge, the current collector containing the above element has an effect of inhibiting deformation of the electrode having the current collector. A content of the contained element is not particularly limited, but preferably each 100 mass-ppm or less from the viewpoint of obtaining a higher effect of inhibiting the deformation. Such an effect of inhibiting the deformation can further improve the cycle characteristics.

A surface of the negative electrode current collector may be roughened, or may not be roughened. Examples of the roughened negative electrode current collector include a metal foil having been subjected to an electrolytic treatment, an emboss treatment, or a chemical etching. Examples of the unroughened negative electrode current collector include a rolled metal foil.

[Negative Electrode Active Material Layer]

The negative electrode active material layer may contain the negative electrode active material that can occlude (insert) and release lithium ions, and the negative electrode active material may contain negative electrode active material particles. The negative electrode active material particles contain, for example, silicon compound particles containing a silicon compound containing oxygen (silicon oxide particles).

It is preferable that the negative electrode active material contain the silicon compound particles (silicon-based negative electrode active material), and the silicon compound particles be a silicon oxide material containing a silicon compound containing oxygen. In $SiO_x$ being this silicon compound, "x", which represents a composition ratio between silicon and oxygen to constitute the $SiO_x$, is preferably a number satisfying $0.8 \leq x \leq 1.2$ from the viewpoints of the cycle characteristics and resistance of the silicon oxide. Among these, the composition of $SiO_x$ having "x" of closer to 1 is more preferable because high cycle characteristics can be obtained.

The composition of the silicon compound in the present invention does not necessarily means a purity of 100%, and the silicon compound may contain a trace amount of impurity elements.

The silicon compound preferably does not contain crystalline Si utmost. Containing no crystalline Si utmost can prevent excessively high reactivity with the electrolyte liquid, and consequently prevent deterioration of the battery characteristics. The silicon compound is preferably substantially amorphous.

The silicon compound preferably contains Li, and a part thereof preferably forms $Li_2SiO_3$ as a silicate. This $Li_2SiO_3$ contains a crystalline portion but is active against charge and discharge. This $Li_2SiO_3$ is $Li_2SiO_3$ as it is in a slurry state, but changes into $Li_4SiO_4$ by repeated charge and discharge.

It is particularly preferable that the negative electrode contain the negative electrode active material particles, the negative electrode active material particles contain $Li_2SiO_3$ and contain silicon oxide particles coated with a carbon layer, and LizSiOs contain a crystalline portion.

The negative electrode containing such negative electrode active material particles can achieve a higher capacity and more improved cycle characteristics, and can sufficiently inhibit the battery inflation.

$Li_2SiO_3$ with higher crystallinity is more hardly converted into $Li_4SiO_4$. Meanwhile, $Li_2SiO_3$ with low crystallinity is easily eluted into a slurry. Thus, there is an optimal range.

Specifically, before the negative electrode active material particles are charged and discharged, the negative electrode active material particles preferably have a peak derived from a Si (111) crystal plane obtained by X-ray diffraction using Cu-K$\alpha$ ray, a crystallite size corresponding to the crystal plane is preferably 5.0 nm or less, and a ratio A/B of an intensity A of the peak derived from the Si (111) crystal plane relative to an intensity B of a peak derived from a $Li_2SiO_3$ (111) crystal plane preferably satisfies the following formula (2),

$$0.4 \leq A/B \leq 1.0 \quad ...(2).$$

An enlargement degree of the Li silicate and a crystalline degree of Si (for example, the crystallite size corresponding to the Si (111) crystal plane) can be determined by X-ray diffraction (hereinafter, also referred to as "XRD").

As the X-ray diffraction apparatus, D8 ADVANCE, manufactured by Bruker AXS GmbH., may be used. The X-ray source is Cu K$\alpha$ ray, a Ni filter is used, and the measurement is performed at an output of 40 kV / 40 mA, a slit width of 0.3°, a step width of 0.008°, and a range of 10 to 40° with a counting time per step of 0.15 seconds.

The peak derived from the Si (111) crystal plane appears near $2\theta = 28.4°$ in the X-ray diffraction chart.

The crystallite size corresponding the Si (111) crystal plane is preferably 5.0 nm or less, more preferably 4.0 nm or less, and more preferably 2.5 nm or less.

The ratio A/B of the intensity A of the peak derived from the Si (111) crystal plane relative to the intensity B of the peak derived from the $Li_2SiO_3$ (111) crystal plane preferably satisfies $0.40 \leq A/B \leq 1.00$, more preferably $0.45 \leq A/B \leq 0.75$, and further preferably $0.50 \leq A/B \leq 0.70$.

Here, the peak derived from the $Li_2SiO_3$ (111) crystal plane appears within a range of $2\theta = 17°$ to $21°$ in the X-ray diffraction chart.

A median diameter of the negative electrode active material according to a laser diffraction method is preferably 5.0 um or more and 15.0 $\mu$m or less, more preferably 5.5 $\mu$m or more and 10.0 $\mu$m or less, and further preferably 6.0 um or more and 8.0 $\mu$m or less from the viewpoint of control of the reaction with the electrolyte liquid or inhibition of expansion of the negative electrode active material accompanied with charge and discharge.

The negative electrode active material layer may contain a mixed negative electrode active material containing the silicon-based negative electrode active material and a carbon-base active material. This mixed material can reduce electric resistance of the negative electrode active material layer, and can relax expansion stress with charge. Examples of the carbon-base active material include natural graphite, artificial graphite, hard carbon, and soft carbon.

The negative electrode active material layer contains the negative electrode active material that can occlude and release lithium ions, and may further contain other materials such as a negative electrode binding agent (binder) and a conductive auxiliary from the viewpoint of battery design.

As the negative electrode binding agent, any one or more of polymer materials, synthetic rubbers, etc. may be used, for example. Examples of the polymer material include polyvinylidene fluoride, a polyimide, a polyamideimide, an aramid, polyacrylic acid, lithium polyacrylate, sodium polyacrylate, and carboxymethylcellulose. Examples of the synthetic rubber include a styrene-butadiene-based rubber, a fluorine-based rubber, and ethylene-propylene-diene.

Examples of the negative electrode conductive auxiliary include carbon fine particles, carbon black, acetylene black, graphite, Ketjenblack, carbon nanotube, and carbon nanofiber, and any one or more of these may be used.

The negative electrode active material layer is formed with an application method, for example. The application method is a method in which the silicon-based negative electrode active material, the binder, etc. are mixed with the negative electrode conductive auxiliary and the carbon-based active material as necessary, and then the mixture is dispersed in an organic solvent, water, etc. and applied.

[Separator]

The inventive non-aqueous electrolyte secondary battery may further have a separator.

The separator separates lithium metal or the positive electrode and the negative electrode, and enables lithium ions to permeate while preventing current short circuit due to contacting of both the electrodes. This separator is formed with a porous film composed of, for example, a synthetic resin or a ceramic. The separator may have a laminated structure in which two types or more of the porous films are laminated. Examples of the synthetic resin include polytetrafluoroethylene, polypropylene, and polyethylene.

In the inventive non-aqueous electrolyte secondary battery, at least a part of the positive electrode active material layer, at least a part of the negative electrode active material layer, and at least a part of the separator can be impregnated with the non-aqueous electrolyte liquid, for example.

[Constitution Example of Non-Aqueous Electrolyte Secondary Battery]

Next, an example of a laminated film-type lithium-ion secondary battery will be described with reference to the drawings as a specific example of the inventive non-aqueous electrolyte secondary battery. It should be noted that the inventive non-aqueous electrolyte secondary battery is not limited to the following specific example.

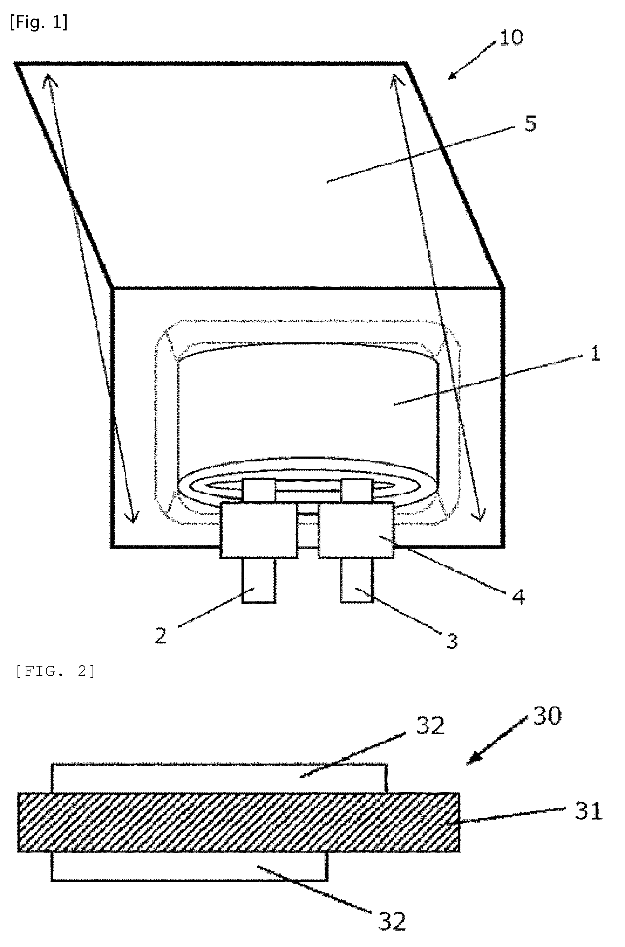

In a laminated film-type lithium-ion secondary battery 10 illustrated in FIG. 1, an electrode assembly 1 is housed inside an exterior member 5 mainly having a sheet shape. This electrode assembly 1 has the positive electrode, the negative electrode, and the separator interposed therebetween, which are wound. In some cases, an electrode assembly 1 is not wound, and housed as a laminate having the positive electrode, the negative electrode, and the separator interposed therebetween. In any of the electrode assemblies, a positive electrode lead 2 is attached to the positive electrode, and a negative electrode lead 3 is attached to the negative electrode. An outermost periphery of the electrode assembly is protected with a protective tape.

The negative electrode may have a structure having a cross section illustrated in FIG. 2, for example. A negative electrode 30 illustrated in FIG. 2 has constitution having a negative electrode active material layer 32 on a negative electrode current collector 31.

Although not illustrated, the positive electrode has constitution having a positive electrode active material layer on a positive electrode current collector, for example, similarly to the negative electrode 30.

The positive electrode lead 2 and the negative electrode lead 3 are drawn out in one direction from an inside to outside of the exterior member 5, for example. The positive electrode lead 2 is formed with a conductive material such as, for example, aluminum. The negative electrode lead 3 is formed with a conductive material such as, for example, nickel and copper.

The exterior member 5 is, for example, a laminated film in which a fusion layer, a metal layer, and a surface-protective layer are laminated in this order. In this laminated film, two of these laminated films are laminated by fusion or an adhesive at outer peripheries of the fusion layers thereof so that the fusion layer is opposite to the electrode assembly 1. The fused portion is, for example, a film of polyethylene, polypropylene, etc., and the metal portion is an aluminum foil, etc. The protective film is of, for example, nylon.

Between the exterior member 5 and each of the positive electrode lead 2 and the negative electrode lead 3, an adhesion film 4 is inserted in order to prevent penetration of outside air. A material thereof is, for example, polyethylene, polypropylene, or a polyolefin resin.

The exterior member 5 further houses the inventive non-aqueous electrolyte liquid. At least a part of the positive electrode active material layer, at least a part of the negative electrode active material layer 32, and at least a part of the separator, which are contained in the electrode assembly 1, are impregnated with the non-aqueous electrolyte liquid.

EXAMPLES

Hereinafter, the present invention will be more specifically described with showing Synthesis Examples, Examples, and Comparative Examples of the present invention, but the present invention is not limited to these Examples.

[Silane Compound]

(Synthesis Example 1)

Into a flask equipped with a stirrer, a dropping funnel, a condenser, and a thermometer, 500 mL of a tetrahydrofuran solution of 1.4[mol/L] vinylmagnesium chloride (700 mmol) was provided, and stirred at room temperature. Into the solution, 45.3 g (443 mmol) of ethynylbenzene was added dropwise, and the mixture was stirred at room temperature for 1 hour. Subsequently, 37.7 g (223 mmol) of trichlorovinylsilane was added dropwise, and the mixture was stirred at room temperature for 2 hours. After 123 g of 10-mass% hydrochloric acid was added, phase separation was performed to remove an aqueous phase. The obtained organic phase was subjected to simple distillation to obtain 32.7 g of bis(phenylethynyl)divinylsilane (PEDVS) as a fraction at a boiling point of 180 to 181°C / 0.4 kPa.

(Synthesis Example 2)

Into a flask equipped with a stirrer, a dropping funnel, a condenser, and a thermometer, 154.8 g of a tetrahydrofuran solution of 387 [g/mol] methylmagnesium chloride (400 mmol) and 120 mL of tetrahydrofuran were provided, and stirred at room temperature. Into the solution, 40.8 g (400 mmol) of ethynylbenzene was added dropwise, and the mixture was stirred at room temperature for 1 hour. Subsequently, 28.2 g (200 mmol) of dichloromethylvinylsilane was added dropwise, and the mixture was stirred at room temperature for 2 hours. After 70.4 g of 10-mass% hydrochloric acid and 12.0 g of pure water were added, phase separation was performed to remove an aqueous phase. The obtained organic phase was subjected to simple distillation to obtain 46.1 g of bis(phenylethynyl)methylvinylsilane (PEMVS) as a fraction at a boiling point of 179°C / 0.3 kPa.

(Synthesis Example 3)

Into a flask equipped with a stirrer, a dropping funnel, a condenser, and a thermometer, 24.4 g of a tetrahydrofuran solution of 387 [g/mol] methylmagnesium chloride (63 mmol) and 19 mL of tetrahydrofuran were provided, and stirred at 50°C. Into the solution, 10.0 g (32 mmol) of 4-ethynylanisole was added dropwise, and the mixture was stirred at 50°C for 1 hour. Subsequently, 4.5 g (32 mmol) of dichloromethylvinylsilane was added dropwise, and the mixture was stirred at 50°C for 2 hours. After 15.0 g of pure water were added, phase separation was performed to remove an aqueous phase. The organic phase was concentrated with an evaporator to obtain a crude solid product. This crude product was dissolved into 5.0 g of heated acetone and recrystallized to obtain 6.8 g of bis(4-methoxyphenylethynyl)methylvinylsilane (M-PEMVS).

(Synthesis Example 4)

Into a flask equipped with a stirrer, a dropping funnel, a condenser, and a thermometer, 101.5 g of a tetrahydrofuran solution of 387 [g/mol] methylmagnesium chloride (263 mmol) was provided, and stirred at 40°C. Into the solution, 31.5 g (263 mmol) of 4-fluorophenylacetylene was added dropwise, and the mixture was stirred at 40°C for 1 hour. Subsequently, 18.5 g (131 mmol) of dichloromethylvinylsilane was added dropwise, and the mixture was stirred at 40°C for 2 hours. After 54.0 g of pure water was added, phase separation was performed to remove an aqueous phase. The obtained organic phase was subjected to simple distillation to obtain 30.0 g of bis(4-fluorophenylethynyl)methylvinylsilane (F-PEMVS) as a fraction at a boiling point of 181°C / 0.1 kPa.

(Example 1)

[Production of Negative Electrode]

As a negative electrode current collector, an electrolytic copper foil with 15 $\mu$m in thickness was used. This electrolytic copper foil contained carbon and sulfur at each 70 mass-ppm.

As silicone-based negative electrode active material particles, KSC-7130 (silicon oxide particles containing $Li_2SiO_3$ and coated with a carbon layer; median diameter 6.5 um, manufactured by Shin-Etsu Chemical Co., Ltd.) was provided. These silicon-based negative electrode active material particles were analyzed by XRD. The following Table 1 shows, in the silicon-based negative electrode active material particles, a ratio A/B of an intensity A of a peak (appearing near $2\theta = 28.4°$) derived from a Si (111) crystal plane relative to an intensity B of a peak (appearing within a range of $2\theta = 17°$ to 21°) derived from a $Li_2SiO_3$ (111) crystal plane. The analysis by XRD demonstrated that, in the silicon-based negative electrode active material particles prepared in Example 1, Si had low crystallinity and was substantially amorphous.

The provided silicon-based negative electrode active material particles, artificial graphite (median diameter: 15 um) as a carbon-based negative electrode active material, carbon nanotube and carbon fine particles having a median diameter of approximately 50 nm as negative electrode conductive auxiliaries, and sodium polyacrylate and carboxymethylcellulose as negative electrode binding agents were mixed at a dry mass ratio of 9.3 : 83.7 : 1 : 1 : 4 : 1, and then the mixture was diluted with pure water to prepare a negative electrode mixture slurry.

The negative electrode mixture slurry was applied on the negative electrode current collector, and dried in a vacuum atmosphere at 100°C for 1 hour. A deposition amount of a negative electrode active material layer per unit area (area density) on one surface of the negative electrode after the drying was 7.0 mg/cm$^2$.

[Preparation of Non-Aqueous Electrolyte Liquid]

Ethylene carbonate (EC) and dimethyl carbonate (DMC) as non-aqueous solvents were mixed, and then lithium hexafluorophosphate: $LiPF_6$ was dissolved as an electrolyte salt to prepare an electrolyte liquid. In this case, a composition of the solvent was EC : DMC = 30 : 70 at a volume ratio, and a content of the electrolyte salt was 1 mol/kg relative to the solvent.

As additives, vinylene carbonate (VC), fluoroethylene carbonate (FEC), and bis(phenylethynyl)divinylsilane (a silane compound represented by the general formula (1); referred to as "PEDVS" hereinafter) were added at respectively 1.0 mass%, 2.0 mass%, and 0.1 mass% to prepare a non-aqueous electrolyte liquid of Example 1.

[Fabrication of Coin Battery for Test]

Then, a coin battery for test was assembled as follows.

First, Li foil with 1 mm in thickness was punched to 16 mm in diameter, and adhered to an aluminum clad.

The negative electrode obtained by the above method was punched to 15 mm in diameter, disposed opposite to the Li foil via a separator, the non-aqueous electrolyte liquid obtained by the above method was injected, and then a 2032 coin battery (diameter: 20.0 mm, thickness: 3.2 mm) being a non-aqueous electrolyte secondary battery for an initial efficiency test was fabricated.

[Measurement of Initial Efficiency]

First, the fabricated coin battery for an initial efficiency test was charged (initial charge) at a charge rate of equivalently 0.03 C with a CCCV mode. The CV was 0 V, and the termination current was 0.04 mA. Then, the coin battery was CC-discharged (initial discharge) at a discharge rate of similarly 0.03 C and a discharge termination voltage of 1.2 V.

For determining initial charge-discharge characteristics, the initial efficiency was calculated.

The initial efficiency was calculated with the formula respected by Initial efficiency (%) = (Initial discharge capacity / Initial charge capacity) $\times$ 100.

[Manufacture of Non-Aqueous Electrolyte Secondary Battery]

From the obtained initial data, a counter positive electrode was designed so that a utilization rate of the negative electrode was 95%. The utilization rate was calculated based on the following formula from capacities of the positive and negative electrodes obtained from the counter electrode Li.

Utilization rate = (Positive electrode capacity - Negative electrode loss) / (Negative electrode capacity - Negative electrode loss) $\times$ 100

Based on this design, a non-aqueous electrolyte secondary battery of Example 1 was manufactured.

[Discharge Capacity Retention after 500 Cycles]

As cycle characteristics, a discharge capacity retention after 500 cycles was evaluated.
To stabilize the battery, under an atmosphere at 25°C, the non-aqueous electrolyte secondary battery of Example 1 was firstly subjected to charge-and-discharge at 0.2 C with two cycles to measure a discharge capacity at the 2nd cycle. The cycle characteristics were calculated from a discharge capacity at the 3rd cycle. The battery was charged at 0.7 C and discharged at 0.5 C until the 500th cycle, and a discharge capacity at the 500th cycle relative to the discharge capacity at the 2nd cycle was determined as the discharge capacity retention after the 500 cycles. In this time, the charge voltage was 4.3 V, the discharge termination voltage was 2.5 V, and the charge termination rate was 0.07 C.

[Increase Rate of Battery Thickness (Evaluation of Swelling)]

When the discharge capacity at the 2nd cycle was measured in the evaluation of the cycle characteristics, a thickness of an inflated portion of the battery was also measured. Thereafter, the battery was subjected to charge-and-discharge from the 3rd cycle to the 500th cycle under the above conditions, and a thickness of the battery after the 500 cycles was measured. Based on the thickness of the battery after the 2 cycles, an increase rate of the thickness of the battery after the 500 cycles accompanied with increase in volume was determined.
The increase rate of the battery thickness was evaluated with a 543436-sized battery (thickness: 5.4 mm, width: 34 mm, and height: 36 mm). The thickness was measured at a center of a portion with a largest area.

(Example 2 to Example 6)

Non-aqueous electrolyte liquids of Example 2 to Example 6 were prepared in the same manner as in Example 1 except that the amount of the added PEDVS additive was changed as shown in the following Table 1. In addition, non-aqueous electrolyte secondary batteries of Example 2 to Example 6 were produced in the same manner as in Example 1 except that each of the non-aqueous electrolyte liquids was used. The battery characteristics of the obtained batteries were evaluated in the same manner as in Example 1.

(Example 7)

A non-aqueous electrolyte liquid of Example 7 was prepared in the same manner as in Example 1 except that the PEDVS additive was changed to bis(phenylethynyl)methylvinylsilane (a silane compound represented by the general formula (1); referred to as "PEMVS"). In addition, a non-aqueous electrolyte secondary battery of Example 7 was produced in the same manner as in Example 1 except that this non-aqueous electrolyte liquid was used. The battery characteristics of the obtained battery were evaluated in the same manner as in Example 1.

(Example 8 to Example 12)

Non-aqueous electrolyte liquids of Example 8 to Example 12 were prepared in the same manner as in Example 7 except that the amount of the added PEMVS additive was changed as shown in the following Table 1. In addition, non-aqueous electrolyte secondary batteries of Example 8 to Example 12 were produced in the same manner as in Example 1 except that each of the non-aqueous electrolyte liquids was used. The battery characteristics of the obtained batteries were evaluated in the same manner as in Example 1.

(Example 13 to Example 18)

The silicon material (silicon-based negative electrode active material) was subjected to an additional thermal treatment to control crystallinity of Si and $Li_2SiO_3$, and battery characteristics were evaluated. The temperature was regulated within a range of 600 to 700°C.

The silicon-based negative electrode active material particles used in Examples 13 to 18 were analyzed by XRD similarly to the silicon-based negative electrode active material particles used in Example 1. The following Table 1 shows, in each of the silicon-based negative electrode active material particles, the ratio A/B of the intensity A of the peak (appearing near $2\theta = 28.4°$) derived from the Si (111) crystal plane relative to the intensity B of the peak (appearing within a range of $2\theta = 17°$ to $21°$) derived from the $Li_2SiO_3$ (111) crystal plane.

A crystallite size corresponding to the Si (111) crystal plane was calculated from the peak derived from the Si (111) crystal plane based on Scherrer's equation. The following Table 1 shows the results.

From the results shown in Table 1, confirmed was a tendency that raising the thermal treatment temperature promoted crystallization of Si to deteriorate the battery characteristics.

In Examples 13 to 18, non-aqueous electrolyte secondary batteries were produced in the same manner as in Example 3 except that the silicon-based negative electrode active material subjected to the additional thermal treatment as above was used. The battery characteristics of the obtained batteries were evaluated in the same manner as in Example 1.

(Example 19)

A non-aqueous electrolyte liquid of Example 19 was prepared in the same manner as in Example 1 except that the PEDVS additive was changed to bis(4-methoxyphenylethynyl)methylvinylsilane (a silane compound represented by the general formula (1); referred to as "M-PEMVS" hereinafter). In addition, a non-aqueous electrolyte secondary battery of Example 19 was produced in the same manner as in Example 1 except that this non-aqueous electrolyte liquid was used. The battery characteristics of the obtained battery were evaluated in the same manner as in Example 1.

(Example 20 to Example 24)

Non-aqueous electrolyte liquids of Example 20 to Example 24 were prepared in the same manner as in Example 19 except that the amount of the added M-PEMVS additive was changed as shown in the following Table 1. In addition, non-aqueous electrolyte secondary batteries of Example 20 to Example 24 were produced in the same manner as in Example 1 except that each of the non-aqueous electrolyte liquids was used. The battery characteristics of the obtained batteries were evaluated in the same manner as in Example 1.

(Example 25)

A non-aqueous electrolyte liquid of Example 25 was prepared in the same manner as in Example 1 except that the PEDVS additive was changed to bis(4-fluorophenylethynyl)methylvinylsilane (a silane compound represented by the general formula (1); referred to as "F-PEMVS" hereinafter). In addition, a non-aqueous electrolyte secondary battery of Example 25 was produced in the same manner as in Example 1 except that this non-aqueous electrolyte liquid was used. The battery characteristics of the obtained battery were evaluated in the same manner as in Example 1.

(Example 26 to Example 30)

Non-aqueous electrolyte liquids of Example 26 to Example 30 were prepared in the same manner as in Example 25 except that the amount of the added F-PEMVS additive was changed as shown in the following Table 1. In addition, non-aqueous electrolyte secondary batteries of Example 26 to Example 30 were produced in the same manner as in Example 1 except that each of the non-aqueous electrolyte liquids was used. The battery characteristics of the obtained batteries were evaluated in the same manner as in Example 1.

(Comparative Example 1)

A non-aqueous electrolyte liquid of Comparative Example 1 was prepared in the same manner as in Example 1 except that PEDVS was not added as the additive. In addition, a non-aqueous electrolyte secondary battery of Comparative Example 1 was produced in the same manner as in Example 1 except that this non-aqueous electrolyte liquid was used. The battery characteristics of the obtained battery were evaluated in the same manner as in Example 1.

[Results]

The following Table 1 summarizes the evaluation results of the non-aqueous electrolyte secondary batteries obtained in Examples 1 to 30 and Comparative Example 1.

[Table 1]

| | Non-aqueous electrolyte liquid | | Negative electrode | | Battery evaluation | |
|---|---|---|---|---|---|---|
| | Silane compound | Addition amount (mass%) | A/B | Crystallinity or crystallite size (nm) of Si (111) | Discharge capacity retention (%) after 500 cycles | Increase rate (%) in battery thickness |
| Example 1 | PEDVS | 0.1 | 0.55 | Amorphous | 83 | 15.0 |
| Example 2 | PEDVS | 1.0 | 0.55 | Amorphous | 82 | 13.5 |
| Example 3 | PEDVS | 2.0 | 0.55 | Amorphous | 85 | 10.5 |
| Example 4 | PEDVS | 3.0 | 0.55 | Amorphous | 84 | 10.2 |
| Example 5 | PEDVS | 5.0 | 0.55 | Amorphous | 81 | 10.1 |
| Example 6 | PEDVS | 6.0 | 0.55 | Amorphous | 80 | 9.8 |
| Example 7 | PEMVS | 0.1 | 0.55 | Amorphous | 81 | 17.5 |
| Example 8 | PEMVS | 1.0 | 0.55 | Amorphous | 81 | 17.2 |
| Example 9 | PEMVS | 2.0 | 0.55 | Amorphous | 82 | 16.7 |
| Example 10 | PEMVS | 3.0 | 0.55 | Amorphous | 82 | 16.2 |
| Example 11 | PEMVS | 5.0 | 0.55 | Amorphous | 81 | 15.9 |
| Example 12 | PEMVS | 6.0 | 0.55 | Amorphous | 79 | 15.1 |
| Example 13 | PEDVS | 2.0 | 1.52 | 7.0 | 79 | 14.5 |
| Example 14 | PEDVS | 2.0 | 1.00 | 5.0 | 81 | 13.2 |
| Example 15 | PEDVS | 2.0 | 1. 67 | 9.2 | 78 | 15.5 |
| Example 16 | PEDVS | 2.0 | 0.71 | 3.8 | 82 | 12.2 |
| Example 17 | PEDVS | 2.0 | 0.67 | 2.2 | 83 | 11.9 |
| Example 18 | PEDVS | 2.0 | 0.56 | 1.1 | 84 | 11.1 |
| Example 19 | M-PEMVS | 0.1 | 0.55 | Amorphous | 81 | 16.9 |
| Example 20 | M-PEMVS | 1.0 | 0.55 | Amorphous | 81 | 16.5 |
| Example 21 | M-PEMVS | 2.0 | 0.55 | Amorphous | 82 | 16.4 |
| Example 22 | M-PEMVS | 3.0 | 0.55 | Amorphous | 81 | 16.1 |
| Example 23 | M-PEMVS | 5.0 | 0.55 | Amorphous | 80 | 15.5 |
| Example 24 | M-PEMVS | 6.0 | 0.55 | Amorphous | 78 | 14.9 |
| Example 25 | F-PEMVS | 0.1 | 0.55 | Amorphous | 82 | 15.7 |
| Example 26 | F-PEMVS | 1.0 | 0.55 | Amorphous | 83 | 15.4 |
| Example 27 | F-PEMVS | 2.0 | 0.55 | Amorphous | 83 | 14.8 |
| Example 28 | F-PEMVS | 3.0 | 0.55 | Amorphous | 83 | 14.5 |
| Example 29 | F-PEMVS | 5.0 | 0.55 | Amorphous | 82 | 14.1 |
| Example 30 | F-PEMVS | 6.0 | 0.55 | Amorphous | 80 | 13.7 |
| Comparative Example 1 | - | - | 0.55 | Amorphous | 72 | 20.1 |

From the results shown in Table 1, it is found that the non-aqueous electrolyte secondary batteries of Examples 1 to 30, which are produced by using the non-aqueous electrolyte liquid containing the silane compound represented by the formula (1), exhibit higher discharge capacity retention after the 500 cycles than the non-aqueous electrolyte secondary battery of Comparative Example 1, which is produced by using the non-aqueous electrolyte liquid not containing the silane compound; namely, the batteries of Examples 1 to 30 exhibit excellent cycle characteristics. It is also found that the non-aqueous electrolyte secondary batteries of Examples 1 to 30 can inhibit increase in the battery thickness compared with the non-aqueous electrolyte secondary battery of Comparative Example 1; that is, the batteries of Examples 1 to 30 can inhibit the battery inflation.

From comparison between the results of Example 3 and Examples 13 to 18, it is found that, the peak intensity ratio A/B of XRD of the silicon-based negative electrode active material particles is preferably 0.4 or more and 1.0 or less, the crystallite size of Si (111) is preferably 5.0 nm or less, and Si is particularly preferably amorphous.

The present description includes the following aspects.

[1] A non-aqueous electrolyte liquid, comprising:

a non-aqueous solvent;
an electrolyte salt dissolved in the non-aqueous solvent; and
a silane compound represented by the following general formula (1),

$$\mathrm{Si}(R^1)_l(R^2)_m(R^3)_n(R^4)_{4\text{-}l\text{-}m\text{-}n} \qquad (1)$$

wherein $R^1$ represents an alkenyl group having 2 to 20 carbon atoms, $R^2$ represents a substituted or unsubstituted arylethynyl group having 8 to 20 carbon atoms, $R^3$ represents an alkyl group having 1 to 20 carbon atoms, $R^4$ represents an alkynyl group having 2 to 20 carbon atoms, "l" and "m" each independently represent an integer of 1 to 3, "n" represents an integer of 0 to 2, and "l", "m", and "n" represent integers satisfying $2 \le 1+m+n \le 4$.

[2] The non-aqueous electrolyte liquid according to [1], wherein in the silane compound represented by the general formula (1), the substituted arylethynyl group represented by $R^2$ in the general formula (1) is an arylethynyl group having 8 to 20 carbon atoms in which a part or all of hydrogen atoms in an aryl group are substituted with a hydrocarbon group having 1 to 6 carbon atoms, an alkoxy group having 1 to 6 carbon atoms, or a halogen atom.

[3] The non-aqueous electrolyte liquid according to [1] or [2], wherein in the silane compound represented by the general formula (1), "l" and "m" in the general formula (1) each independently represent an integer of 1 to 3, "n" represents an integer of 0 to 1, and "l", "m", and "n" represent integers satisfying 1+m+n = 4.

[4] The non-aqueous electrolyte liquid according to any one of [1] to [3], wherein a content of the silane compound in the non-aqueous electrolyte liquid is 0.1 mass% to 5.0 mass%.

[5] A non-aqueous electrolyte secondary battery, comprising:

a positive electrode;
a negative electrode; and
a non-aqueous electrolyte liquid,
wherein the non-aqueous electrolyte liquid is the non-aqueous electrolyte liquid according to any one of [1] to [4].

[6] The non-aqueous electrolyte secondary battery according to [5], wherein

the negative electrode contains negative electrode active material particles,
the negative electrode active material particles contain $Li_2SiO_3$ and contain silicon oxide particles coated with a carbon layer, and
the $Li_2SiO_3$ contains a crystalline portion.

[7] The non-aqueous electrolyte secondary battery according to [6], wherein, before the negative electrode active material particles are charged and discharged, the negative electrode active material particles have a peak derived from a Si (111) crystal plane obtained by X-ray diffraction using Cu-K$\alpha$ ray, a crystallite size corresponding to the crystal plane is 5.0 nm or less, and a ratio A/B of an intensity A of the peak derived from the Si (111) crystal plane relative to an intensity B of a peak derived from a $Li_2SiO_3$ (111) crystal plane satisfies the following formula (2),

$$0.4 \leq A/B \leq 1.0 \quad \ldots (2).$$

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

**Claims**

1. A non-aqueous electrolyte liquid, comprising:

   a non-aqueous solvent;
   an electrolyte salt dissolved in the non-aqueous solvent; and
   a silane compound represented by the following general formula (1),

$$Si(R^1)_l(R^2)_m(R^3)_n(R^4)_{4-l-m-n} \quad (1)$$

   wherein $R^1$ represents an alkenyl group having 2 to 20 carbon atoms, $R^2$ represents a substituted or unsubstituted arylethynyl group having 8 to 20 carbon atoms, $R^3$ represents an alkyl group having 1 to 20 carbon atoms, $R^4$ represents an alkynyl group having 2 to 20 carbon atoms, "l" and "m" each independently represent an integer of 1 to 3, "n" represents an integer of 0 to 2, and "l", "m", and "n" represent integers satisfying $2 \leq l+m+n \leq 4$.

2. The non-aqueous electrolyte liquid according to claim 1, wherein in the silane compound represented by the general formula (1), the substituted arylethynyl group represented by $R^2$ in the general formula (1) is an arylethynyl group having 8 to 20 carbon atoms in which a part or all of hydrogen atoms in an aryl group are substituted with a hydrocarbon group having 1 to 6 carbon atoms, an alkoxy group having 1 to 6 carbon atoms, or a halogen atom.

3. The non-aqueous electrolyte liquid according to claim 1, wherein in the silane compound represented by the general formula (1), "l" and "m" in the general formula (1) each independently represent an integer of 1 to 3, "n" represents an integer of 0 to 1, and "l", "m", and "n" represent integers satisfying l+m+n = 4.

4. The non-aqueous electrolyte liquid according to claim 1, wherein a content of the silane compound in the non-aqueous electrolyte liquid is 0.1 mass% to 5.0 mass%.

5. A non-aqueous electrolyte secondary battery, comprising:

   a positive electrode;
   a negative electrode; and
   a non-aqueous electrolyte liquid,
   wherein the non-aqueous electrolyte liquid is the non-aqueous electrolyte liquid according to any one of claims 1 to 4.

6. The non-aqueous electrolyte secondary battery according to claim 5, wherein

   the negative electrode contains negative electrode active material particles,
   the negative electrode active material particles contain $Li_2SiO_3$ and contain silicon oxide particles coated with a carbon layer, and
   the $Li_2SiO_3$ contains a crystalline portion.

7. The non-aqueous electrolyte secondary battery according to claim 6, wherein, before the negative electrode active material particles are charged and discharged, the negative electrode active material particles have a peak derived from a Si (111) crystal plane obtained by X-ray diffraction using Cu-Ka ray, a crystallite size corresponding to the crystal plane is 5.0 nm or less, and a ratio A/B of an intensity A of the peak derived from the Si (111) crystal plane relative to an intensity B of a peak derived from a $Li_2SiO_3$ (111) crystal plane satisfies the following formula (2),

$$0.4 \leq A/B \leq 1.0 \quad \ldots(2).$$

$$0.4 \leq A/B \leq 1.0 \quad \ldots(2).$$

[Fig. 1]

[FIG. 2]

## INTERNATIONAL SEARCH REPORT

International application No.

**PCT/JP2022/025454**

**A.    CLASSIFICATION OF SUBJECT MATTER**

*H01M 10/0567*(2010.01)i; *H01M 4/36*(2006.01)i; *H01M 4/38*(2006.01)i; *H01M 4/48*(2010.01)i; *H01M 4/58*(2010.01)i; *H01M 10/052*(2010.01)i

FI:    H01M10/0567; H01M10/052; H01M4/58; H01M4/38 Z; H01M4/36 C; H01M4/36 A; H01M4/48

According to International Patent Classification (IPC) or to both national classification and IPC

**B.    FIELDS SEARCHED**

Minimum documentation searched (classification system followed by classification symbols)

H01M10/0567; H01M4/36; H01M4/38; H01M4/48; H01M4/58; H01M10/052

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2008-181831 A (DENSO CORP.) 07 August 2008 (2008-08-07) claims 1, 5, paragraphs [0011], [0018], compound no. 16 | 1–5 |
| Y | claims 1, 5, paragraphs [0011], [0018], compound no. 16 | 6-7 |
| Y | JP 2017-97952 A (SHIN-ETSU CHEMICAL CO., LTD.) 01 June 2017 (2017-06-01) claims 1, 7, paragraphs [0012], [0014], [0015], table 4, fig. 4 | 6-7 |
| Y | JP 2013-251097 A (TOYOTA INDUSTRIES CORP.) 12 December 2013 (2013-12-12) claim 2, paragraphs [0010], [0040], [0084], test 1 | 6-7 |

☐ Further documents are listed in the continuation of Box C.        ☑ See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **22 July 2022** | **02 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/025454**

| Patent document cited in search report | | | Publication date (day/month/year) | Patent family member(s) | Publication date (day/month/year) |
|---|---|---|---|---|---|
| JP | 2008-181831 | A | 07 August 2008 | (Family: none) | |
| JP | 2017-97952 | A | 01 June 2017 | US 2019/0097223 A1 claims 15, 21, paragraphs [0053], [0062], [0063], table 4, fig. 4 WO 2017/085911 A1 EP 3364483 A1 TW 201735422 A CN 108292748 A KR 10-2018-0080239 A | |
| JP | 2013-251097 | A | 12 December 2013 | (Family: none) | |

Form PCT/ISA/210 (patent family annex) (January 2015)

**EP 4 379 888 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001185127 A
- JP 2002042806 A
- JP 2006164954 A
- JP 2006114454 A
- JP 2006134719 A